# EUROPEAN PATENT SPECIFICATION

(11) **EP 1 264 732 B1**
(45) Date of publication and mention of the grant of the patent: **04.07.2007**
(21) Application number: 02011153.0
(22) Date of filing: 21.05.2002
(51) Int. Cl.: B60Q 1/56

(54) **Lighting arrangement for the illumination of the number plate of motor-vehicles**
Vorrichtung zur Ausleuchtung des Kennzeichenschilds eines Kraftfahrzeugs
Dispositif d'éclairage pour plaque minéralogique de véhicule

(30) Priority: 08.06.2001 IT PN20010040
(43) Date of publication of application: 11.12.2002
(73) Proprietor: Plastal S.p.A., 33170 Pordenone (IT)
(72) Inventor: Collavo, Andrea, 31044 Montebelluna, Treviso (IT); Manfre', Giovanni, 37042 Caldiero, Verona (IT)
(74) Representative: Giugni, Valter

(56) References cited:
- EP-A- 0 950 565
- FR-A- 2 729 457
- US-A- 4 733 335
- US-A- 4 857 890
- US-A- 5 934 798
- US-A- 6 027 235

## Description

The present invention refers to a lighting arrangement adapted to illuminate the number plate of motor-vehicles, in particular motor-cars.

As generally known, the number plate provided in the rear of motor-cars is usually capable of being illuminated by means of incandescent lamps, which are mounted on at least a support member attached to the body of the vehicle.

In particular, generally known in the art is the practice based on the use of an elongated support body which is attached to the rear boot of the vehicle, and which, further to the lamps for the illumination of the number plate, may for example also support a manually actuatable electro-mechanical device for opening said boot. In other words, a manually actuatable lever is provided there to operate a switch, which in turn is adapted to energize an electric motor, or the like, to release the lock fastening said boot.

In the above cited prior-art solutions, the lamps need to be protected by means of glass coverings, or the like, mounted on the support member. Furthermore, the electrical connections of the same lamps and the above mentioned boot unlocking device are implemented with the use of wirings, or metal strips, as this is described for instance in EP-A-0 976 617.

US-A-5,934,798 discloses a generic lighting arrangement for the illumination of the number plate of motor vehicles comprising LEDs, illuminating said number plate through at least a focusing lens. However, no teaching is supplied concerning the specific optics which is necessary to control the light distribution in order to satisfy the applicable industry standards. In fact, the light signals must not disturb external observers and must illuminate the number plate in an uniform way, taking into consideration that the light intensity is inversely proportional to the square of the distance from the light source.

In any case, the assembly of the whole support member turns out to be undesirably laborious, i.e. demanding, and expensive on an industrial scale.

Furthermore, said support member is scarcely reliable owing to the moisture that, by quite easily penetrating thereinto in correspondence of the glass coverings used as a protection for the lamps, causes the electrical contacts to undergo corrosion/oxidation problems and this obviously gives rise to conditions of malfunction. This phenomenon is even made worse by the combination of such a moisture with the heat generated by the incandescent lamps.

In addition, it should be considered that the bulkiness of the support member sets substantial limitations to the structural and application-related versatility thereof.

In view of substantially minimizing all such drawbacks, it has been proposed to replace the traditional incandescent lamps with an array of high-luminosity LEDs provided in a side-by-side arrangement and embedded in a sealed sandwich-like structure having a transparent protective layer through which the LEDs illuminate the number plate.

Such a solution, however, turned out to be scarcely satisfactory, owing to the fact that the number plate, which is usually situated below the illumination arrangement, has a widened rectangular shape and a surface that extends on a plane upon which the light emitted by said LEDs falls in an almost grazing manner, turns on the whole out as being illuminated in a quite uneven, unsatisfactory manner. In practice, it can be stated that the number plate turns undesirably out to be illuminated with a "spot-like pattern", in which the various spots have a differing and/or insufficient intensity.

It therefore is a main purpose of the present invention to provide a lighting arrangement for the illumination of the number plate of motor-vehicles, which is effective in minimizing the drawbacks connected with the above cited prior-art solutions.

More particularly, it is a purpose of the present invention is to provide a lighting arrangement of the above cited kind, which has a particularly simple and reliable structure, is particular compact, while at the same time ensuring an optimum and agreeable illumination of the number plate.

A further purpose yet of the present invention is to provide a lighting arrangement for the illumination of the number plate of motor-vehicles, which is particularly low-cost and convenient to assemble.

According to the present invention, this object is achieved in a lighting arrangement defined in the independent claim. Embodiments of the invention are disclosed in the dependent claims.

Anyway, features and advantages of the present invention will be more readily understood from the description that is given below by way of non-limiting example with reference to the accompanying drawings, in which:
- Figure 1 is a schematic cross-sectional view of a first embodiment of the lighting arrangement according to the present invention;
- Figure 2 is a perspective exploded view of the main optical component parts of the lighting arrangement of Figure 1;
- Figure 3 is a schematic front view of the lighting arrangement of Figure 1 and the number plate associated thereto; and
- Figure 4 is a schematic cross-sectional view of a different embodiment of the lighting arrangement according to the present invention.

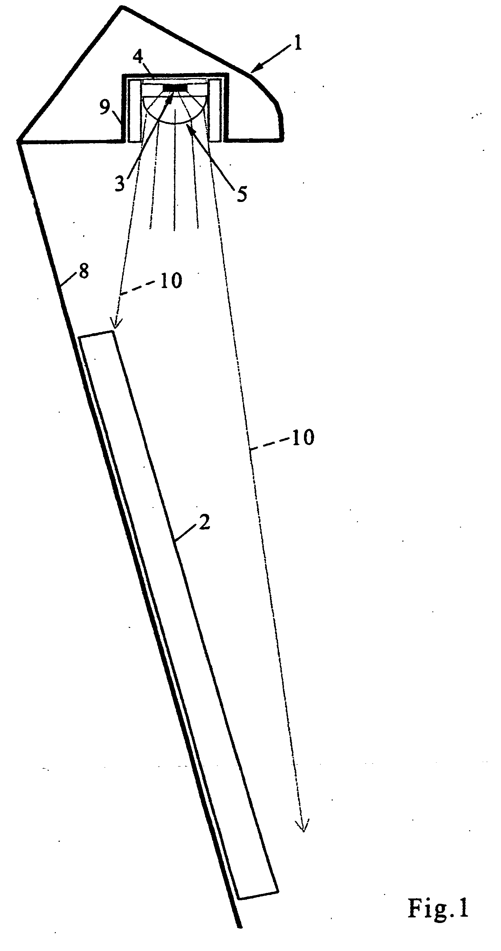

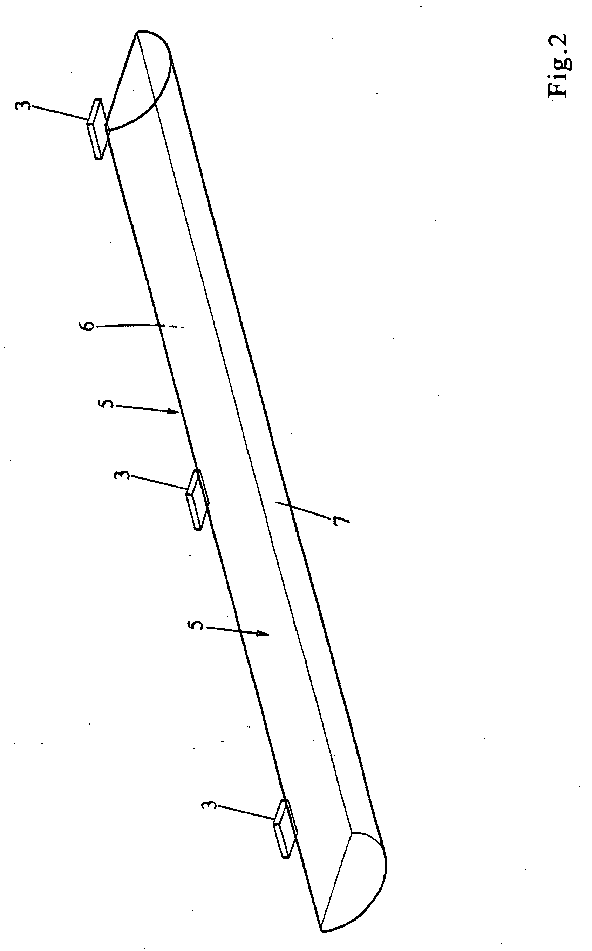

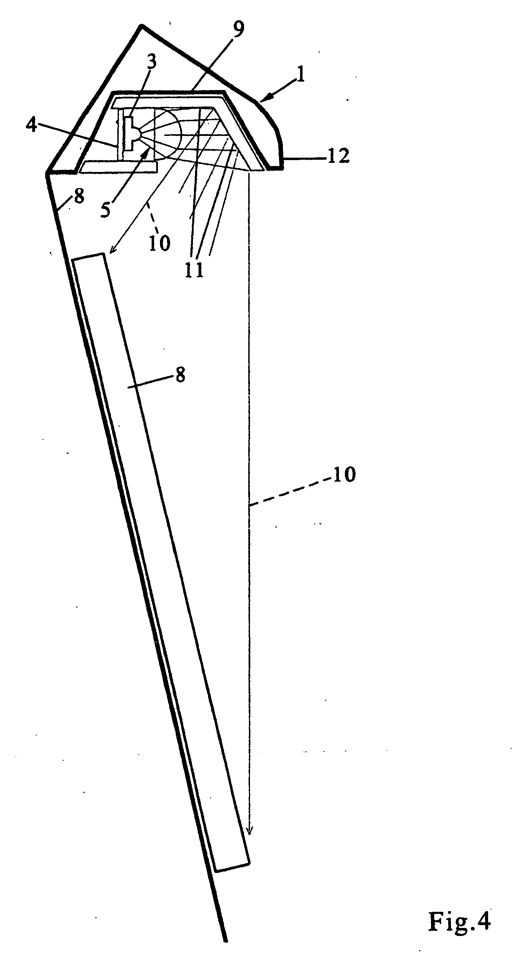

With particular reference to Figures 1 and 2, the lighting arrangement according to the present invention is adapted to be mounted on a support 1, which may be formed directly 30 by the body 8 of a motor-vehicle, or else be constituted by an appropriately shaped member (as shown in Figures 1 and 4) that is in turn adapted to be attached to the body of the vehicle. In any case, the actual support arrangement 1 is located in a position that is adjacent to an edge of the number plate 2, which in the herein described example corresponds to the upper major side of the same number plate.

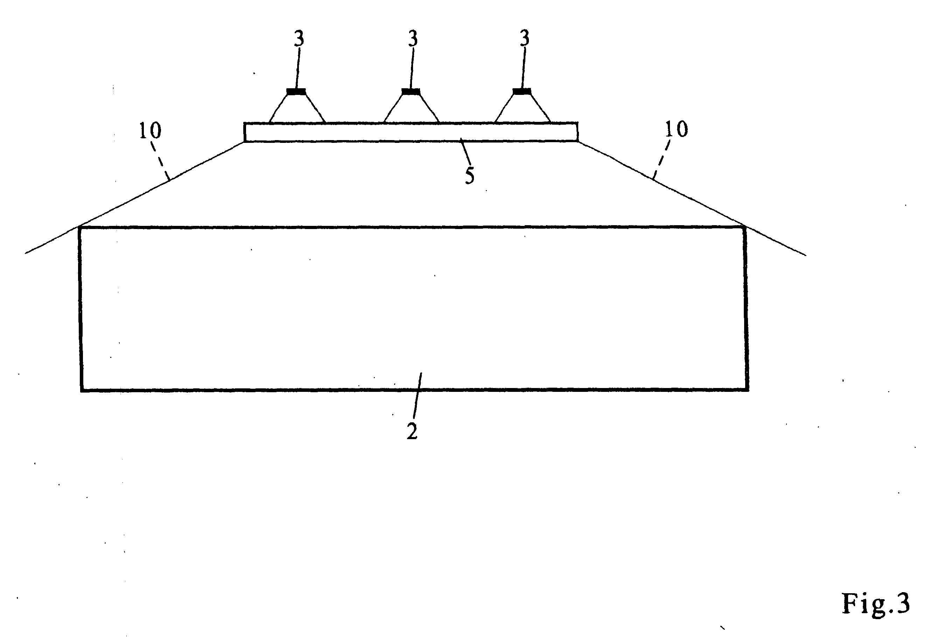

The lighting arrangement mainly comprises one or more LEDs distributed according to a suitable side-by-side arrangement, appropriately spaced from each other, along a direction that is substantially parallel to the plane defined by the number plate 2 of the motor-vehicle. These LEDs (three of which are shown by way of example in Figures 2 and 3, where they are generally indicated at 3) are preferably of the high-intensity white-light type and may for instance be made according to the SMD technology.

Furthermore, the LEDs 3 are preferably attached to a support and connection board 4 of the printed-circuit board type, or the like, which is in turn mounted in a corresponding receptacle 9 provided in the support member 1.

The LEDs 3, each one of which is adapted to emit a beam of light in the shape of a pre-determined cone, are oriented and arranged in such a manner as to be able to illuminate the number plate 2 through at least a focusing lens 5, which may for instance be made of a suitable plastic material (eg. PMMA or PC) or a glass material, wherein such a material shall in any case be substantially transparent to visible light.

According to a feature of the present invention, with respect to the direction of alignment of the LEDs 3, said focusing lens 5 is adapted to substantially collimate (i.e. reduce the natural convergence of) the light emitted by the LEDs themselves in a transversal direction (as illustrated in Figure 1) and diffuse the same light (ie. maintain the natural divergence thereof) in a longitudinal direction (as illustrated in Figure 3).

To such a purpose, the focusing lens 5 is shaped to show a substantially elongated semi-cylindrical (or similar) configuration with the axis thereof extending in a direction that is substantially parallel to the plane of the number plate 2.

As illustrated in Figure 2, in particular, the lens 5 is so shaped as to feature a preferably planar receiving surface 6 facing the LEDs 3 and adjacent thereto.

Furthermore, the lens 5 features a substantially curvilinear and convex (eg. spherical-cylindrical or semicircular) emitting surface 7 opposing the surface 6.

In the herein described example, the emitting surface 7 of the lens is oriented directly towards the number plate 2, i.e. in a direction that is very inclined (almost grazing, as this can be best noticed in Figure 1) with respect to the same number plate, in such a manner as to allow for the use of a support member 1 that protrudes from the body 8 of the motor-vehicle, with respect to the number plate 2, by an advantageously reduced length that substantially does not put any limitation to the structural and application-related versatility thereof.

In any case, the focusing lens 5 directs towards the number plate 2 a light beam (schematically indicated at 10) which is formed by the light emitted by all of the LEDs 3 that are associated to the same lens.

In particular, this light beam 10 is diffused longitudinally so as to substantially fall upon the whole width of the number plate 2, as illustrated in Figure 3.

Furthermore, the light beam 10 is substantially collimated in the transverse direction so as to fall upon the whole height of the number plate 2, as illustrated in Figure 1.

Considering the relation governing the conjugate points or foci of a lens, the LEDs 3 are preferably arranged at a distance q from the vertex of the curvilinear surface 7 of the focusing lens 5 that is substantially equal to or slightly shorter than the focal length f of the same lens. A perfect collimation is obtained in this way, while the light is emitted from the lens 5 as a beam of substantially parallel or just slightly diverging rays, respectively.

In other words, to the purpose of obtaining a regular and diffuse illumination effect it is preferable for the LEDs 3 to be arranged closer to the lens 5 with respect to the position of the focus of the same lens, so as to allow for the light to diverge by the desired angle.

In conclusion, the arrangement comprising the LEDs 3 and the associated focusing lens 5 emits a "shaped" light beam 10 (with a substantially elliptical cross-section) that illuminates the number plate 2 in a substantially complete, uniform manner, with an adequate light intensity and an agreeable aesthetical effect.

It will of course be appreciated that the illumination of the number plate 2 improves with an increasing angle of incidence of the light beam 10. However, as this has been said earlier in this description, such an angle of incidence is limited by the necessarily reduced depth of the support member 1.

Even this drawback can anyway be minimized by an embodiment according to the variant illustrated in Figure 4, in which the focusing lens 5 is so oriented as to be able to emit the light beam 10 in a direction that is substantially orthogonal to the plane of the number plate 2, and such a light beam is reflected towards the number plate by at least a reflecting surface 11, which may be planar, parabolic or variously shaped according to the needs.

Preferably, said reflecting surface 11 is arranged inside the same seat or receptacle 9 accommodating the LEDs 3, in a position that is adjacent to the extremity 12 of the support member 1 which is most protruding with respect to the number plate 2. It is therefore possible, through the use of extremely simple, reliable, low-cost and scarcely space-demanding means, for the angle of incidence of the light beam 10 upon the number plate 2 to be sensibly increased (by as much as this is allowed for by the form and the dimensions of the support member 1), so that the same number plate turns actually out to be illuminated in a still more effective manner.

In addition, the reflecting surface 11 enables the length of the optical path to be increased and, with it, the overlapping effect of the light beams emitted by the various LEDs to be advantageously enhanced.

It will be appreciated that the above described lighting arrangement may be the subject of a number of modifications without departing from the scope of the present invention as defined in the appended claims.

For instance, a same number plate 2 may be illuminated through more focusing lenses 5 provided in a side-by-side arrangement and/or each focusing lens 5 may also be associated to a single LED 3, as already mentioned earlier in this description.

## Claims

1. Lighting arrangement for the illumination of the number plate of motor-vehicles, comprising one or more LEDs that are adapted to emit each a pre-determined respective conical beam of light and are provided in a side-by-side arrangement along a direction that is substantially parallel to the plane defined by said number plate, said LEDs (3) are adapted to illuminate said number plate (2) through at least a focusing lens (5),
**characterized in that**
said lens (5) is so shaped as to feature a substantially elongated semi-cylindrical conformation with the axis thereof extending in a direction that is substantially parallel to the plane of the number plate (2), in which said lens (5) has a planar receiving surface (6) facing said LEDs (3) and a convex emitting surface (7) opposed to said receiving surface, and, with respect to the direction of alignment of the LEDs (3), is adapted to substantially limit the divergence of the light emitted by the same LEDs in the transverse direction, while on the contrary favouring the natural divergence of the same light in the longitudinal direction.

2. Lighting arrangement for the illumination of the number plate of motor-vehicles according to claim 1, **characterized in that** said LEDs (3) are situated at a distance (q) from the vertex of said convex surface (7) of the lens (5), in which said distance is substantially equal to or slightly shorter than the focal length (f) of the same lens.

3. Lighting arrangement for the illumination of the number plate of motor-vehicles according to claim 1, **characterized in that** said LEDs (3) are attached to a support and connection board (4) of the printed-circuit board type or the like.

4. Lighting arrangement for the illumination of the number plate of motor-vehicles according to claim 1, **characterized in that** said LEDs (3) and said lens (5) are mounted in a receptacle (9) provided in a support member (1) adjacent to said number plate (2) and protruding with respect thereto.

5. Lighting arrangement for the illumination of the number plate of motor-vehicles according to claim 4, **characterized in that** said planar emitting surface (6) of the lens (5) is oriented directly towards the number plate (2) in a substantially grazing direction.

6. Lighting arrangement for the illumination of the number plate of motor-vehicles according to claim 4, **characterized in that** said light beam (10) emitted by the lens (5) is reflected towards the number plate (2) by at least a reflecting surface (11).

7. Lighting arrangement for the illumination of the number plate of motor-vehicles according to claim 6, **characterized in that** said reflecting surface (11) is provided in correspondence of an extremity (12) of said support member (1) protruding with respect to the number plate (2).

## Patentansprüche

1. Beleuchtungsanordnung zur Beleuchtung des Nummernschilds von Motorfahrzeugen, welche eine oder mehrere LEDs aufweist, die so ausgebildet sind, dass jede einen vorbestimmten jeweiligen kegelförmigen Lichtstrahl aussendet, und die in einer nebeneinanderliegenden Anordnung entlang einer Richtung vorgesehen, sind, die im Wesentlichen parallel zu der durch das Nummernschild definierten Ebene ist, wobei die LEDs (3) so ausgebildet sind, dass sie das Nummernschild (2) durch mindestens eine Fokussierlinse (5) hindurch beleuchten,
**dadurch gekennzeichnet, dass**
die Linse (5) so geformt ist, dass sie das Merkmal einer im Wesentlichen länglichen halbzylindrischen Gestalt aufweist, wobei sich die Achse von dieser in einer Richtung ersteckt, die im Wesentlichen parallel zur Ebene des Nummernschilds (2) ist, wobei die Linse (5) eine planare Aufnahmefläche (6), die den LEDs (3) zugewandt ist, und eine konvexe Abstrahlfläche (7) aufweist, die der Aufnahmefläche gegenüberliegt, und, bezüglich der Fluchtungsrichtung der LEDs (3) so ausgebildet ist, dass sie die Streuung des durch diese LEDs ausgesendeten Lichts in Querrichtung im Wesentlichen begrenzt, hingegen die natürliche Streuung dieses Lichts in Längsrichtung fördert.

2. Beleuchtungsanordnung zur Beleuchtung des Nummernschildes von Motorfahrzeugen nach Anspruch 1, **dadurch gekennzeichnet, dass** sich die LEDs (3) in einer Entfernung (q) vom Scheitelpunkt der konvexen Fläche (7) der Linse (5) befinden, wobei die Strecke im Wesentlichen gleich groß oder geringfügig kürzer als die Brennweite (f) dieser Linse ist.

3. Beleuchtungsanordnung zur Beleuchtung des Nummernschildes von Motorfahrzeugen nach Anspruch 1, **dadurch gekennzeichnet, dass** die LEDs (3) an einer Träger- und Verbindungsplatine (4) vom Typ einer gedruckten Schaltungsplatine oder dergleichen befestigt sind.

4. Beleuchtungsanordnung zur Beleuchtung des Nummernschildes von Motorfahrzeugen nach Anspruch 1, **dadurch gekennzeichnet, dass** die LEDs (3) und die Linse (5) in einem Behältnis (9) montiert sind, das in einem zum Nummernschild (2) benachbarten Trägerelement (1) vorgesehen ist und bezüglich diesem vorsteht.

5. Beleuchtungsanordnung zur Beleuchtung des Nummernschildes von Motorfahrzeugen nach Anspruch 4, **dadurch gekennzeichnet, dass** die planare Abstrahlfläche (6) der Linse (5) direkt zum Nummernschild (2) hin in einer im Wesentlichen streifenden Richtung orientiert ist.

6. Beleuchtungsanordnung zur Beleuchtung des Nummernschildes von Motorfahrzeugen nach Anspruch 4, **dadurch gekennzeichnet, dass** der durch die Linse (5) abgestrahlte Lichtstrahl (10) durch mindestens eine Reflexionsfläche (11) zum Nummernschild (2) hin reflektiert wird.

7. Beleuchtungsanordnung zur Beleuchtung des Nummernschildes von Motorfahrzeugen nach Anspruch 6, **dadurch gekennzeichnet, dass** die Reflexionsfläche (11) in Entsprechung zu einem Ende (12) des Trägerelementes (1) vorgesehen ist, das bezüglich des Nummernschildes (2) vorsteht.

## Revendications

1. Dispositif d'éclairage de la plaque minéralogique de véhicules, comprenant une ou plusieurs diodes électroluminescentes (DEL) qui sont adaptées pour émettre chacune respectivement un faisceau de lumière conique prédéterminé et sont fournies dans une disposition côte à côte le long d'une direction qui est sensiblement parallèle au plan défini par ladite plaque minéralogique, lesdites DEL (3) sont adaptées pour éclairer ladite plaque minéralogique (2) à travers au moins une lentille de focalisation (5),
**caractérisé en ce que**
ladite lentille (5) est formée de façon à présenter une conformation sensiblement allongée semi-cylindrique dont l'axe de celle-ci s'étend dans une direction qui est sensiblement parallèle au plan de la plaque minéralogique (2), dans lequel ladite lentille (5) a une surface réceptrice plane (6) faisant face aux dites DEL (3) et une surface émettrice convexe (7) opposée à ladite surface réceptrice et, par rapport à la direction de l'alignement des DEL (3), est adaptée pour limiter sensiblement la divergence de la lumière émise par ces mêmes DEL dans la direction transversale, tout en favorisant au contraire la divergence naturelle de cette même lumière dans la direction longitudinale.

2. Dispositif d'éclairage de la plaque minéralogique de véhicules selon la revendication 1, **caractérisé en ce que** lesdites DEL (3) sont situées à une distance (q) du sommet de ladite surface convexe (7) de la lentille (5), dans lequel ladite distance est sensiblement égale ou légèrement plus courte que la distance focale (f) de cette même lentille.

3. Dispositif d'éclairage de la plaque minéralogique de véhicules selon la revendication 1, **caractérisé en ce que** lesdites DEL (3) sont fixées à une plaque de support et de connexion (4) du type carte à circuits imprimés ou similaire.

4. Dispositif d'éclairage de la plaque minéralogique de véhicules selon la revendication 1, **caractérisé en ce que** lesdites DEL (3) et ladite lentille (5) sont montées dans un réceptacle (9) fourni dans un élément de support (1) adjacent à ladite plaque minéralogique (2) et faisant saillie par rapport à celle-ci.

5. Dispositif d'éclairage de la plaque minéralogique de véhicules selon la revendication 4, **caractérisé en ce que** ladite surface émettrice convexe (7) de la lentille (5) est orientée directement en direction de la plaque minéralogique (2) dans une direction sensiblement rasante.

6. Dispositif d'éclairage d'une plaque minéralogique de véhicules selon la revendication 4, **caractérisé en ce que** ledit faisceau de lumière (10) émis par la lentille (5) est réfléchi en direction de la plaque minéralogique (2) par au moins une surface réfléchissante (11).

7. Dispositif d'éclairage de la plaque minéralogique de véhicules selon la revendication 6, **caractérisé en ce que** ladite surface réfléchissante (11) est fournie en correspondance d'une extrémité (12) dudit élément de support (1) faisant saillie par rapport à la plaque minéralogique (2).
